# EUROPÄISCHE PATENTSCHRIFT

(11) **EP 1 176 112 B1**
(45) Veröffentlichungstag und Bekanntmachung des Hinweises auf die Patenterteilung: **20.10.2004**
(21) Anmeldenummer: 01710035.5
(22) Anmeldetag: 24.07.2001
(51) Int. Cl.: B65H 75/40, B65H 75/44, B62B 1/10

(54) **Fahrbare Transporteinrichtung für Wickelgut**
Mobile transport device for winding material
Dispositif de transport mobile pour matériau à enrouler

(30) Priorität: 26.07.2000 DE 10036315
(43) Veröffentlichungstag der Anmeldung: 30.01.2002
(73) Patentinhaber: GARDENA Manufacturing GmbH, 89079 Ulm (DE)
(72) Erfinder:
(74) Vertreter: Patentanwälte Ruff, Wilhelm, Beier, Dauster & Partner

(56) Entgegenhaltungen:
- DE-A- 2 112 294
- DE-B- 1 063 672
- DE-B- 1 100 548
- DE-B- 1 266 602
- DE-C- 278 910
- FR-A- 1 326 348
- US-A- 1 918 768
- US-A- 2 016 625
- US-A- 3 078 059
- US-A- 5 957 400

## Beschreibung

Die Erfindung betrifft eine fahrbare Transporteinrichtung für Wickelgut, insbesondere einen Schlauchwagen, gemäß dem Oberbegriff von Anspruch 1.

Transporteinrichtungen dieser Art werden beispielsweise als fahrbare Schlauchwagen im Gartenbereich eingesetzt. Sie haben ein normalerweise mit einem Handgriff o. dgl. versehenes Gestell, an dem ein Fahrwerk zum Verfahren der Transporteinrichtung auf einer Bodenoberfläche und mindestens eine Wickeltrommel zum Aufwickeln von Wickelgut, beispielsweise einem Schlauch oder einem Kabel, vorgesehen ist. Das Fahrwerk, welches üblicherweise mehrere Bodenräder oder -rollen aufweist, umfaßt mindestens ein durch Bewegung der Transporteinrichtung drehbares, d.h. durch die Vorschub- oder Rückzugbewegung der Transporteinrichtung angetriebenes Drehelement und eine Kraftübertragungseinrichtung zur Herstellung einer Antriebsverbindung zwischen diesem Drehelement und der Wickeltrommel. Eine derartige, beispielsweise als Getriebe ausgebildete Kraftübertragung ermöglicht die Kopplung der Vorschub- oder Rückzugbewegung der Transporteinrichtung mit der Wickelbewegung der Wickeltrommel, so daß beispielsweise beim Verfahren der Transporteinrichtung ein Schlauch durch die drehend angetriebene Wickelrolle automatisch ab- oder aufgewickelt wird.

Ein Schlauchwagen, bei dem eine Schlauchtrommel über ein Getriebe durch die Drehung von Bodenrädern antreibbar ist, ist aus der DE 43 04 127 bekannt. Bei diesem Schlauchwagen sind die Durchmesser der mit dem Getriebe verbundenen Bodenräder, das Getriebeübersetzungsverhältnis und der Durchmesser der Wickeltrommel so aufeinander abgestimmt, daß bei leerer Wickeltrommel der zurückgelegte Fahrweg im wesentlichen der durch Drehung der Wickelrolle bewirkten Aufwicklungslänge entspricht. Dadurch wird ein exaktes einlagiges Aufrollen des Schlauches möglich, wobei gleichzeitig eine sich waagerecht bewegende Schlauchführung angetrieben wird, die dafür sorgt, daß sich der Schlauch bei jeder Trommeldrehung knapp, aber gut an den vorher aufgewickelten Abschnitt anlegt. Eine mehrlagige Aufwicklung ist nicht vorgesehen.

Aus der DE-A 2112294 ist eine Schlauchwickelvorrichtung der eingangs genannten Art bekannt, bei der zwei Paare von drehmomentübertragenden Organen als Getriebeverbindung zwischen einer Laufradwelle und der Aufwickelwelle vorgesehen sind. Das Antriebsorgan des ersten Paares überträgt dabei eine höhere Drehzahl bei konstant drehender Laufradwelle auf die Schlauchwicklerwelle als das zweite Paar. Das auf die Schlauchwicklerwelle übertragene Drehmoment ist dabei jeweils mit einer Rutschkupplung nach oben begrenzt und das Abtriebsorgan des anderen Paares ist über einen Freilauf mit der Schlauchwicklerwelle verbunden. Durch diese Ausgestaltung wird es möglich, bei der Schlauchwicklung eine gleiche Lagenbildung zu erreichen. Nicht verhindert werden kann dagegen ein Verrutschen des aufzuwickelnden Schlauches auf dem Boden.

Der Erfindung liegt die Aufgabe zugrunde, eine fahrbare Wickelgut-Transporteinrichtung der eingangs erwähnten Art zu schaffen, die ein problemloses Auf- und Abwickeln auch größerer Wickelgutlängen ermöglicht und die Wickeleigenschaften verbessert.

Diese Aufgabe wird gelöst durch eine fahrbare Transporteinrichtung mit den Merkmalen von Anspruch 1. Bevorzugte Weiterbildungen sind in den abhängigen Ansprüchen angegeben.

Durch die Mermale des Patentanspruchs 1 werden die Wickeleigenschaften der Transporteinrichtung wesentlich begünstigt durch die der Wickeltrommel in Fahrtrichtung bei Aufwicklung vorgeschaltete Andrückeinrichtung zum Andrücken von auf der Bodenoberfläche liegendem Wickelgut auf die Bodenoberfläche. Durch einen hierdurch möglichen leichten Andruck beispielsweise eines aufzuwickelnden Schlauches auf eine Rasenoberfläche wird ein Verrutschen des Schlauches auf dem Boden weitgehend verhindert, so daß beispielsweise ein in Kurven ausgelegter Schlauch auch nicht unter Verkürzung der ausgelegten Kurven straff gezogen wird. Damit läßt sich eine ruhige, kontinuierliche Aufwicklung ohne Drehgeschwindigkeitssprünge der Wickelrolle erzielen. Zweckmäßig erstreckt sich die Andrückeinrichtung im wesentlichen über die gesamte Breite der Transporteinrichtung, um insbesondere auch bei Kurvenfahrten einen ausreichenden Andruck des Wickelgutes sicherzustellen. Obwohl der Andruck durch Kufen, Bürsten o. dgl. erreicht werden kann, weist die Andruckeinrichtung als Andruckorgan vorzugsweise mindestens einen zum Abrollen auf dem ausgelegten Wickelgut vorgesehenen Rollkörper auf, um einen leichte Relativbewegung zwischen Andrückeinrichtung und Wickelgut zu ermöglichen. Die für einen Andruck erforderliche, Richtung Bodenoberfläche wirkende Druckkraft wird vorzugsweise mindestens zum Teil durch die Transporteinrichtung selbst bereitgestellt, so daß hierfür kein Kraftaufwand eines Bedieners erforderlich wird. So kann z.B. die Andrückeinrichtung im Bezug auf die Wickeltrommel derart angeordnet sein, daß mindestens ein Teil des Gewichts der Wickeltrommel auf der Andrückeinrichtung lastet. Eine Ausführungsform, bei der die Andrückeinrichtung durch Frontrollen eines Fahrwerks gebildet werden, wird bei den Ausführungsformen beschrieben.

Eine insbesondere als Schlauchwagen ausgebildete, erfindungsgemäße Transporteinrichtung der eingangs erwähnten Art ist derart ausgebildet, daß bei ein- oder mehrlagigem Aufwickeln von Wickelgut eine begrenzte Wickelkraft auf das Wickelgut ausgeübt werden kann. Die Wickelkraft stellt sich dabei automatisch so ein, daß keine übermäßigen, den Schlauch oder anderes Wickelgut über eine größere Strecke spannenden Zugkräfte auftreten. Damit wird das Wickelgut beim Wickelvorgang geschont und gleichzeitig eine straffe und damit kompakte bzw. raumsparende Aufwicklung möglich. Die begrenzte Wickelkraft wird weitgehend unabhängig vom Wickeldurchmesser bereitgestellt, so daß sie sowohl bei einlagiger Wicklung, als auch bei Vorliegen mehrerer Wicklungslagen bereitgestellt wird. Entsprechend können auch große Wickelgutlängen auf einer Wickeltrommel begrenzter Breite untergebracht werden. Die Größe der begrenzten Wickelkraft ist dabei zweckmäßig so bemessen, daß einerseits die Bildung von losen Wickelschlaufen vermieden wird und daß andererseits das ggf. hohle Wickelgut nicht zusammengedrückt oder auf andere Weise übermäßig belastet wird.

Eine bevorzugte Weiterbildung sieht hierzu vor, daß die Kraftübertragungseinrichtung zwischen dem Drehelement und der Wickeltrommel mindestens eine automatische Drehmomentbegrenzungseinrichtung zur Begrenzung des von dem Drehelement auf die Wickeltrommel übertragenen Drehmomentes aufweist. Hierdurch kann ohne äußeren Eingriff eines Bedieners automatisch eine Lockerung oder Unterbrechung der Antriebskopplung zwischen Fahrwerk und Wickeltrommel stattfinden, sobald durch die Bewegung der Transporteinrichtung mehr Drehmoment bereitgestellt wird, als für die Aufrechterhaltung der begrenzten Wickelkraft erforderlich ist. Insbesondere kann innerhalb des Kraftübertragungsweges von dem Fahrwerk zur Wickeltrommel eine Art Rutschkupplung vorgesehen sein, die beispielsweise sicherstellen kann, daß bei Vorliegen größerer Schlauchlagendurchmesser und/oder bei mehrlagiger Aufwicklung die Fahrwerksseite bzw. Antriebsseite der Wickeltrommeldrehung vorauseilen kann, ohne daß die Kraftübertragung völlig aufgehoben wird.

Die Drehmomentbegrenzungseinrichtung kann jeden geeigneten Aufbau haben, der die genannte Rutschkupplungsfunktion sicherstellt. Bei einer Weiterbildung, die sich vor allem durch einfachen Aufbau, Robustheit und zuverlässige Funktion auszeichnet, hat die Drehmomentbegrenzungseinrichtung ein Kupplungsteil in Form eines Kupplungszahnrades und ein anderes drehbares Kupplungsteil mit mindestens einem federbelasteten Mitnehmerelement, das zum Eingriff in die Zahnung des Kupplungszahnrades ausgebildet ist. Dadurch wird unterhalb eines Grenzdrehmomentes eine formschlüssige Mitnahme der beiden Kupplungsteile erzielt, während bei Überschreitung des Grenzdrehmomentes das Mitnehmerelement gegen die Federkraft die formschlüssige Eingriffstellung verläßt, so daß eine Relativdrehung der Kupplungsteile gegeneinander möglich wird. Zweckmäßig ist das Mitnehmerelement als Rollkörper oder Wälzkörper, beispielsweise nach Art einer Walze ausgebildet, wodurch ein verschleißarmer Kupplungsbetrieb gefördert wird. Vorzugsweise sind mehrere gleichmäßig entlang des Umfanges des Kupplungszahnrades verteilte Mitnehmerelemente vorgesehen, um einerseits einen zuverlässigen Eingriff sicherzustellen und andererseits eine automatische Zentrierung des Kupplungszahnrades zu fördern, welches aber auch selbständig in einer Führung einliegen kann.

Bei mehreren, beispielsweise vier, Mitnehmerelementen kann vorgesehen sein, daß die Zahnung des Kupplungszahnrades eine Anzahl von Zähnen hat, die nicht durch die Anzahl der Mitnehmerelemente teilbar ist. Dadurch kann erreicht werden, daß immer nur ein Teil der Mitnehmerelemente in vollem Eingriff mit der Zahnung steht und daß die Rastschrittweite beim Durchrasten der Wickeltrommel um einen Faktor von beispielsweise zwei gegenüber dem Umfangsabstand benachbarter Zähne vermindert wird. Damit kann auch bei grober Zahnung eine feine Rastung erreicht werden.

Bei einer im Zusammenhang mit den Zeichnungen noch näher erläuterten Ausführungsformen ist vorgesehen, daß die Zahnung des Kupplungszahnrades bzgl. einer Drehrichtungsumkehr unsymmetrisch ist, wobei vorzugsweise die Zähne der Zahnung eine steile und eine demgegenüber flachere Flanke aufweisen. Wie noch erläutert werden wird, kann dadurch beispielsweise bei schneller Relativdrehung der Kupplungsteile ein Springen der Mitnehmerelemente und eine dadurch verursachte Verringerung der Mitnehmerkraft vermieden werden und außerdem wird eine einfachere Drehung der Wickeltrommel von Hand im Aufwickelsinne mit geringerem Kraftaufwand möglich.

Durch die Kraftübertragung kann also bei einer als Schlauchwagen ausgebildeten Transporteinrichtung eine automatische Aufrollung des Schlauches bei Fahrtrichtung des Schlauchwagens in Richtung eines ausgelegten Schlauchabschnittes erreicht werden. Bei einer Weiterbildung kann die kraft- bzw. drehmomentübertragende Kopplung zwischen Fahrwerk und Wickeltrommel bei Bedarf aufgehoben werden. Hierzu kann die Kraftübertragungseinrichtung eine vorzugsweise manuell betätigbare Kupplung zur wahlweisen Aufhebung oder Herstellung der Antriebsverbindung zwischen Drehelement und Wickeltrommel aufweisen, die beispielsweise über einen Kupplungshebel betätigbar sein kann. Die Aufhebbarkeit der Antriebsverbindung ist beispielsweise dann von Vorteil, wenn der Schlauch, oder anderes Wickelgut, von Hand bei stehender Transporteinrichtung von der Wickeltrommel abgewickelt werden soll oder wenn die Transporteinrichtung nur zum Transport ohne Drehung der Wickeltrommel verfahren werden soll.

Neben zahlreichen, dem Fachmann bekannten Möglichkeiten zur Realisierung einer derartigen Kupplung ist eine Variante bevorzugt, bei der die Kupplung mindestens ein zwischen einem antriebsseitigen bzw. fahrwerkseitigen Zahnrad und einem abtriebseitigen Zahnrad angeordnetes Kupplungszahnrad aufweist, das durch Verlagerung seiner Drehachse wahlweise in Eingriff bzw. außer Eingriff mit mindestens einem der benachbarten Zahnräder gebracht werden kann. Derartige Kupplungen sind besonders in einem Flachgetriebe vorteilhaft realisierbar. Wenn die Drehachse des Kupplungszahnrades um die Drehachse eines seiner Nachbarzahnräder verschwenkbar ist, so bleibt das Kupplungszahnrad mit diesem Zahnrad auch im ausgekuppelten Zustand in Eingriff, so daß eine nachfolgende Einkupplung besonders zuverlässig durchführbar ist.

Es ist möglich, daß die durch die Kraftübertragungseinrichtung ermöglichte Kopplung zwischen Fahrwerk und Wickelrolle in beide Fahrtrichtungen der Transporteinrichtung wirksam ist, so daß die Wickeltrommel sowohl in Aufwickel-, als auch in Abwickelrichtung antreibbar ist. Vorzugsweise ist jedoch vorgesehen, daß die Kraftübertragungseinrichtung für einen nur in Aufwickelrichtung der Wickeltrommel wirksame Antriebsverbindung zwischen Drehelement und Wickeltrommel ausgebildet ist. Dies ist bei einer Weiterbildung dadurch realisiert, daß die Kraftübertragungseinrichtung zwischen dem Drehelement des Fahrwerkes und der Wickeltrommel mindestens eine Freilaufeinrichtung aufweist, insbesondere nach Art eines Klinkenfreilaufs. Dadurch wäre auch in Abwesenheit einer ausrückbaren Kupplung eine einfache manuelle Abwicklung von Wickelgut auch bei stehender Transporteinrichtung möglich.

Ein Ausführungsbeispiel der Erfindung ist in den Zeichnungen dargestellt und wird im folgenden näher erläutert. Es zeigen:
- Fig. 1: eine schrägperspektivische Vorderansicht einer bevorzugten Ausführungsform eines erfindungsgemäßen Schlauchwagens;
- Fig. 2: eine Seitenansicht mit wesentlichen Elementen einer Kraftübertragungseinrichtung zur Herstellung einer Antriebsverbindung zwischen den Bodenrädem und der Wickeltrommel des in Fig. 1 gezeigten Schlauchwagens, gesehen von der Innenseite eines die Getriebeelemente aufnehmenden Gehäuses;
- Fig. 3: eine schematische, teilweise geschnittene Draufsicht auf einen Teil der Kraftübertragungseinrichtung mit einer zwischen einem Bodenrad und einer Antriebswelle vorgesehenen Freilaufeinrichtung;
- Fig. 4: eine schematische, teilweise geschnittene Draufsicht auf einen Teil der Kraftübertragungseinrichtung mit einem Kupplungszahnrad, das in Eingriff mit einem Zahnrad einer Rutschkupplung steht;
- Fig. 5: eine schematische, teilweise geschnittene Draufsicht auf einen Teil der Kraftübertragung mit einem Kupplungszahnrad, dessen Drehachse durch Betätigung eines Kupplungshebels verlagerbar ist;
- Fig. 6: eine seitliche Detailansicht des Bereiches des Kupplungshebels mit beweglicher Schutzabdekung des Gehäuses; und
- Fig. 7: eine vergrößerte Teilansicht aus Fig. 2 zur Erläuterung des Aufbaus der Drehmomentbegrenzungseinrichtung.

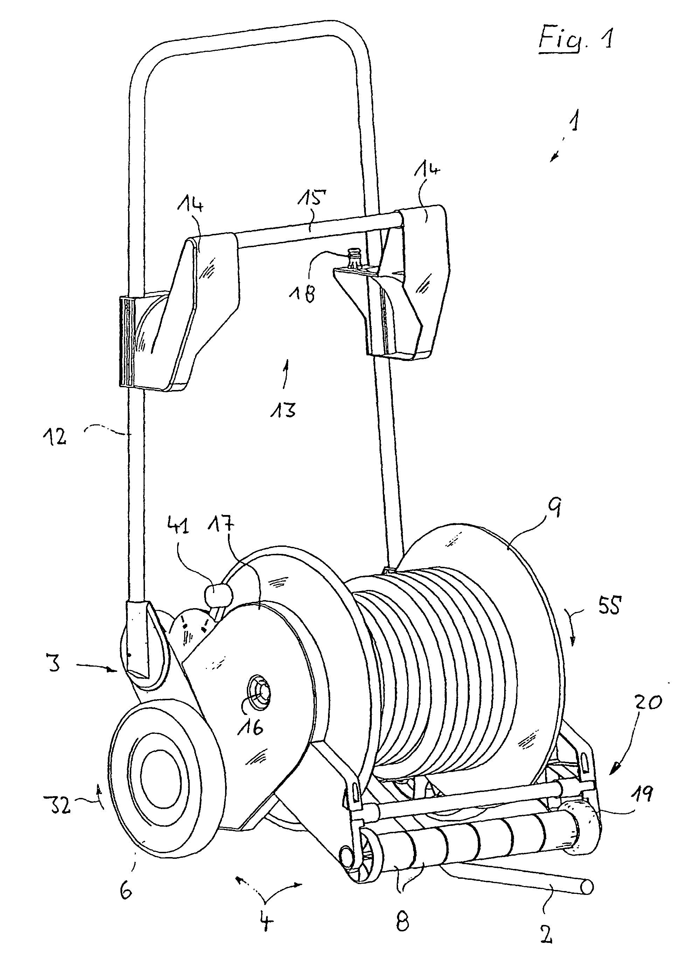

Die schrägperspektivische Vorderansicht in Fig. 1 zeigt eine bevorzugte Ausführungsform eines fahrbaren Schlauchwagens 1, mit dessen Hilfe Wickelgut in Form eines flexiblen Gartenschlauches 2 transportiert und auf- bzw. abgewickelt werden kann. Der Schlauchwagen hat ein Gestell 3, das im wesentlichen aus biegesteifen, spritzgegossenen Kunststoffteilen besteht und mit Hilfe eines an seiner Unterseite angebrachten Fahrwerkes 4 auf einer Bodenoberfläche, beispielsweise einem Rasenstück, verfahren werden kann. Das Fahrwerk 4 umfaßt zwei am Gestell 3 um eine Bodenradachse 5 drehbar gelagerte, hintere Bodenräder 6 und am Vorderende des Gestells auf einer horizontalen, zylindrischen Stange 7 aufgefädelte Frontrollen 8 kleineren Durchmessers. Oberhalb des Fahrwerkes ist am Gestell 3 eine Schlauchwickeltrommel 9 um eine horizontale Trommelachse 10 drehbar gelagert. Der Schwerpunkt der Schlauchtrommel 9, die insbesondere bei teilweise oder vollständig aufgewickeltem Schlauch den Hauptgewichtsbeitrag des Schlauchwagens bildet, liegt in Fahrtrichtung zwischen den Bodenrädern und den Frontrollen, so daß das Gewicht der Schlauchtrommel auch nennenswert auf den Frontrollen 8 lastet.

Zur Handhabung des Schlauchwagens dient ein am Hinterende des Gestelles um eine horizontale Griffbügelachse 11 schwenkbarer, im wesentlichen U-förmiger Griffbügel 12, der ausgehend von der gezeigten senkrechten bzw. aufrechten Stellung sowohl nach vorn, d.h. Richtung Schlauchtrommel, als auch nach hinten anschlagsbegrenzt verschwenkbar ist und dank einer nicht näher erläuterten Gelenkeinrichtung in jeder eingestellten Schwenkstellung am Gestell festlegbar ist. An den vertikalen Schenkeln des Griffbügels ist eine höhenverstellbare Schlauchhalteeinrichtung 13 befestigt, die zwei an den vertikalen Schenkeln des Griffbügels angeschraubte Schlauchauflagen umfaßt, die über eine horizontale, als zusätzliche Griffstange nutzbare Stange 14 verbunden sind.

Auf das im wesentlichen zylindrische Innenteil der Wickeltrommel 9 kann eine große Länge von beispielsweise 10 m bis 30 m eines Gartenschlauches o. dgl. in mehreren Lagen aufgewickelt werden. Das trommelseitige Ende des langen Schlauchstückes ist dabei an einen nicht gezeigten, im Zentrum der Wickelrolle angeordneten Schlauchnippel angeschlossen, der durch das Innere der Wickeltrommel hindurch mit einem Auslaßanschluß 16 kommuniziert, der zentrisch zur Trommelachse 10 an der in Fig. 1 sichtbaren Seitenwange 17 des Gestells 3 angeordnet ist. An diesen Auslaßanschluß kann ein kürzeres Stück Arbeitsschlauch, beispielsweise mit einer Länge von 3 m bis 6 m, angeschlossen werden, an dessen Ende ein wasserführendes Arbeitsgerät, beispielsweise eine Spritzdüse, eine Brause, eine Bürste o. dgl. angeschlossen werden kann. Der Arbeitsschlauch kann teilweise oder vollständig locker auf die Schlauchhalteeinrichtung 13 aufgewickelt werden. Ein Arbeitsgerät kann auch auf ein nach Art eines Schlauchanschlußnippels geformtes Anschlußstück 18 der Schlauchhalterung aufgesteckt werden, um es jederzeit griffbereit zu haben.

Der Griffbügel 12 kann ausgehend von der gezeigten aufrechten Ruheposition über seinen Drehpunkt um einen begrenzten Winkel von beispielsweise 5° bis 10° nach vorne verschwenkt werden und durch das eigene Gewicht oder zusätzlich durch ein eventuell am Bügel aufgehängtes Gerät in stabiler Position gehalten werden. Der Griffbügel ist auch nach hinten in eine geneigte Position um einen Winkel von beispielsweise 60° bis 70° verschwenkbar, ohne daß die Frontrollen abheben, wodurch für Bediener unterschiedlicher Größe eine bequeme Fahrstellung bei der Fortbewegung des Schlauchwagens möglich ist. Bei stärkerer Neigung schlägt der Griffbügel an im Bereich der Schwenkgelenke vorgesehene Anschläge an, so daß bei weiterer Absenkung die Frontrollen um die Bodenradachse 5 verschwenkt und nach oben abgehoben werden können, um beispielsweise das Überwinden von Hindernissen zu erleichtern.

Die Bodenräder, die bei manuellem Vorschub bzw. Rückzug des Schlauchwagens drehen, dienen als auftreibbare Drehelemente des Schlauchwagens und sind als Radpaar links und rechts seitlich der Schlauchtrommel 9 angeordnet. Die Frontrollen bilden dagegen eine im wesentlichen über die gesamte Breite des Schlauchwagens durchgehende, weitgehend geschlossene zylindrische Rollfläche. Alternativ zu den gezeigten mehreren Einzelrollen kann auch eine einzige durchgehende Walze vorgesehen sein. Der Schlauch 2 ist zwischen dem auf der Wickeltrommel aufgewickelten Abschnitt und dem auf dem Boden ausgelegten Abschnitt unterhalb der Frontrollen durchgeführt. Bei den Frontrollen zeigen die außen liegenden, randständigen Rollen jeweils eine radial vorstehende Wulst 19, deren radiale Höhe über der ansonsten zylindrischen Rollfläche der Frontrollen geringfügig kleiner als der Durchmesser des Schlauches 2 sein kann. Mit Hilfe der Frontrollen wird eine Andrückeinrichtung 20 geschaffen, die sicherstellt, daß der abgewickelte Schlauch in unmittelbarer Nähe der Schlauchtrommel auf den Boden angedrückt wird. Dadurch kann ein Verrutschen des Schlauches auf dem Boden weitgehend verhindert werden, so daß beispielsweise ein in Kurven ausgelegter Schlauch beim Aufwickeln auch nicht unter Verkürzung der ausgelegten Kurven straff gezogen wird.

Der Schlauchwagen ermöglicht eine automatische Aufrollung eines ausgelegten Schlauches, wenn der Schlauchwagen in Richtung des ausgelegten Schlauchabschnittes, also nach vorne in Richtung der Frontrollen, bewegt wird.

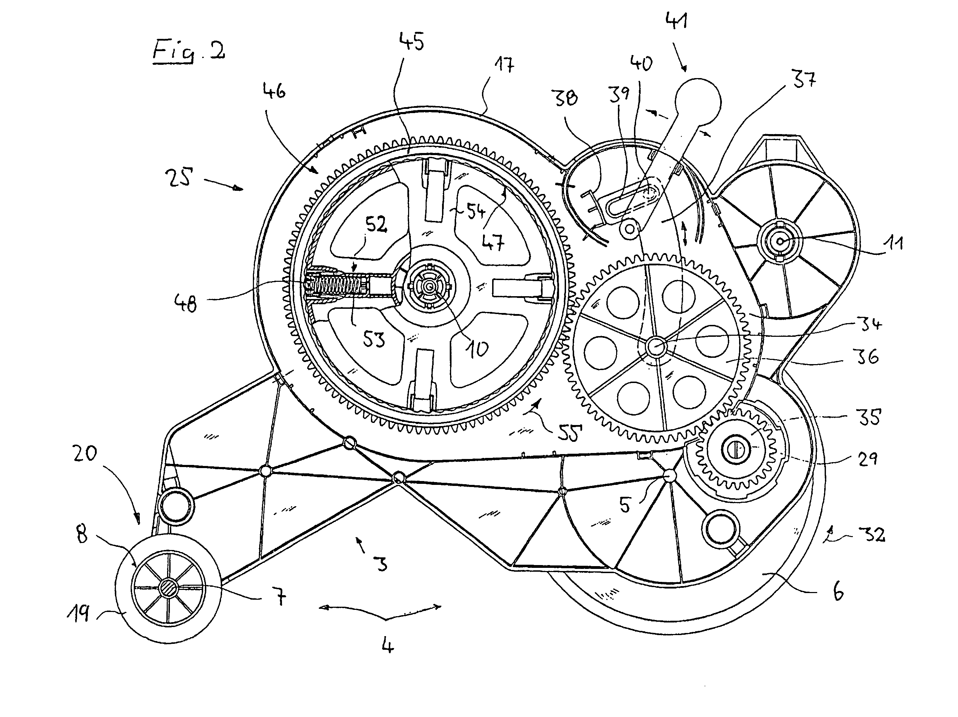

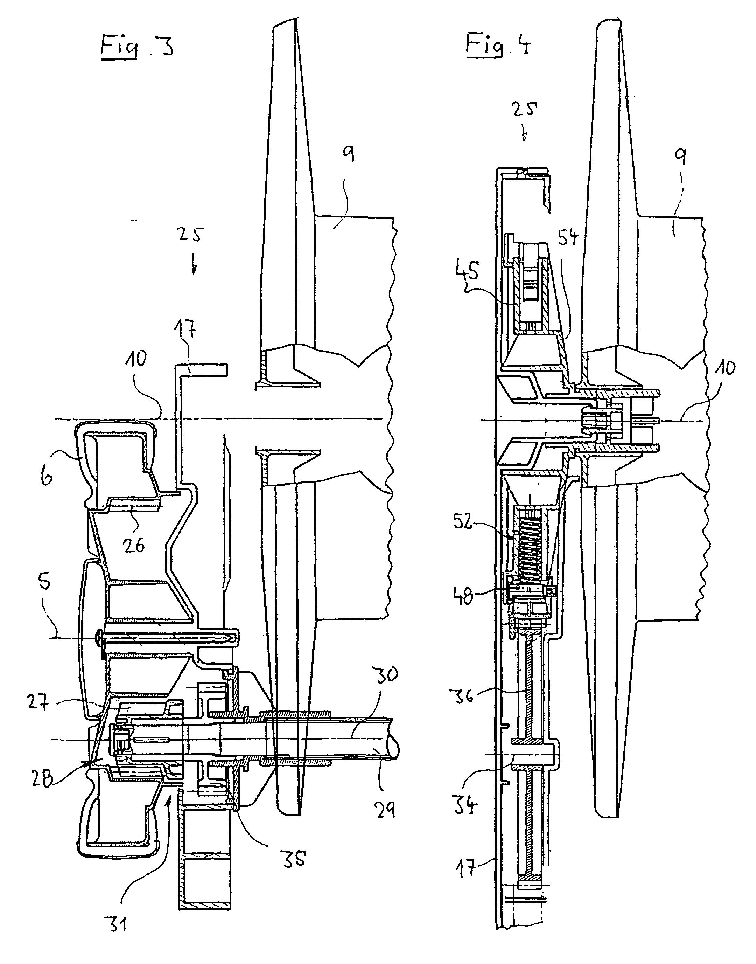

Die hierzu vorgesehene Kraftübertragung zwischen der Bewegung der Bodenräder und der Schlauchtrommelbewegung wird durch eine Kraftübertragungseinrichtung 25 geschaffen, die besonders anhand der Figuren 2 bis 7 im folgenden erläutert wird. Bei jedem der an einer zugeordneten Seitenwange des Gestells 3 drehbar gelagerten Bodenräder 6 ist am Innenumfang des Radkörpers eine Innenzahnung 26 vorgesehen, in die eine Außenzahnung 27 eines Ritzels 28 eingreift, das auf dem durch die Gestellaußenwand nach außen ragenden Außenende einer Antriebswelle 29 sitzt, die um eine Wellenachse 30 drehbar in Lagereinrichtungen gelagert ist, die sich jeweils in den Seitenwangen 17 des Gestelles befinden. Das Ritzel 28 ist mit der Antriebswelle 29 über eine Freilaufeinrichtung 31 verbunden bzw. bildet mit der Antriebswelle 29 eine Freilaufeinrichtung. Diese ist so ausgeführt, daß das Ritzel 28 relativ zur Antriebswelle 29 drehbar ist, wobei die Antriebswelle nur in einem Drehsinn, nämlich bei Drehung der Bodenräder in Vorschubsdrehrichtung 32, mitgenommen wird. Die nach Art eines Klinkenfreilaufes arbeitende Freilaufeinrichtung, die in Antriebsrichtung eine durchrutschsichere Formschlußverbindung zwischen der durch das jeweilige Bodenrad gebildeten Antriebsseite und der Antriebswelle schafft, kann so ausgebildet sein, wie die in der DE 198 37 049 gezeigte Freilaufeinrichtung, deren Merkmale durch Bezugnahme zum Inhalt dieser Beschreibung gemacht werden. Da vorzugsweise auf jeder Seite der Antriebswelle 29 eine derartige Krafteinleitung über einen Freilauf stattfindet, ist auch bei Bodenhaftung nur eines Bodenrades und/oder bei Kurvenfahrt immer ein ausreichender Antrieb gewährleistet.

Die weiteren Getriebeelemente der Kraftübertragungseinrichtung sind vorzugsweise nur auf einer Seite des Schlauchwagens vorgesehen und bilden ein Flachgetriebe, dessen drehbare Getriebeelemente im wesentlichen in einer Ebene angeordnet sind. Die weitgehend verschmutzungsgeschützt innerhalb der Seitenwange 17 untergebrachten Getriebeelemente sind in Fig. 2 in ihrer Gesamtheit sowie in Figuren 3 bis 7 in Teilansichten gezeigt. Die weiteren Getriebeelemente umfassen ein drehfest mit der Antriebswelle 29 verbundenes Zwischenzahnrad 35, dessen Außenzahnung bei eingekuppeltem Getriebe (Fig. 2) mit der Außenzahnung eines koplanaren Kupplungszahnrades 36 in Eingriff steht, das an einem Schieberelement 37 um eine Achse 34 drehbar gelagert ist.

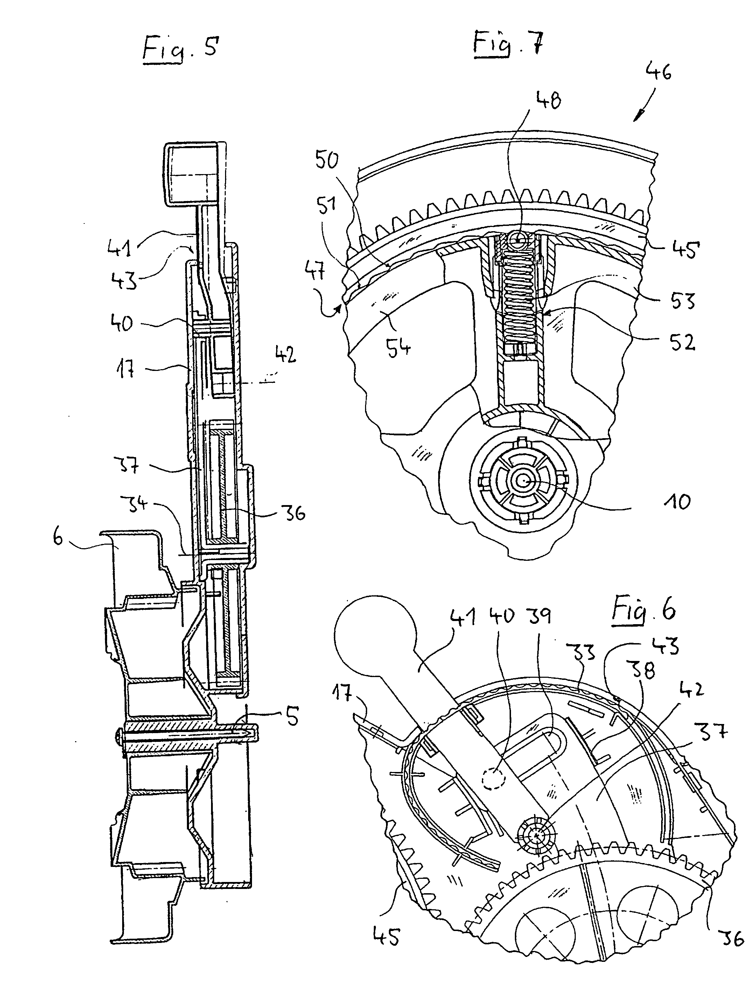

Das flache, kreisbogenförmig gekrümmte Schieberelement 37 ist zwischen Führungsleisten 38 des Gestelles 2 in Kreisbogenrichtung verschiebbar geführt und hat an seinem Oberende eine quer zur Bogenrichtung verlaufende, langlochförmige Ausnehmung 39, in die ein Zapfen 40 eingreift, der seitlich an einem Schwenkhebel 41 exzentrisch zur Hebelschwenkachse 42 angeordnet ist. Das mit einem Halteknopf versehene freie Ende des Schwenkhebels 41 ragt durch einen Führungsschlitz 43 hindurch über die Gehäuseoberseite hinaus. Um den Innenraum des die Flachgetriebeelemente verschließenden, weitgehend geschlossenen Gehäuses gegen Verschmutzung von oben zu schützen, ist der Führungsschlitz 43 mit einer rolloartigen flexiblen Schutzabdeckung 33 (Fig. 6) abgedeckt. Die Schutzabdeckung ist fest mit dem Hebel 41 verbunden, besteht im wesentlichen aus parallelen Kunststoff-Leisten, die über Filmscharniere flexibel verbunden sind und ist zwischen parallel zueinander mit kontinuierlich sich ändernder Krümmung verlaufenden Führungsleisten der Gehäuseaußenwand verschiebbar geführt. Durch Verschwenkung des Hebels 41 zwischen der in Fig. 1 oder fig. 6 gezeigten vorderen Stellung und der in Fig. 2 gezeigten hinteren Stellung ist unter Verschiebung des Schiebers 37 in seinen Führungen die Drehachse 34 des Kupplungszahnrades 36 entlang eines um die Trommelachse 10 verlaufenden Kreisbogens derart verlagerbar, daß das Kupplungszahnrad 36 bei der hinteren Hebeistellung in Eingriff mit dem Zwischenzahnrad 35 sthet, während es in der vorderen Auskuppelstellung aus dem Zwischenzahnrad ausgekuppelt ist.

Das Kupplungszahnrad 36 steht unabhängig von der Stellung des Schwenkhebels 41 mit einem Antriebsring 45 in Eingriff, der koaxial zur Schlauchtrommelachse 10 drehbar am Gestell 2 gelagert ist. Der Antriebsring 45 ist Teil einer nach Art einer Rutschkupplung ausgebildeten, im Kraftübertragungsstrang zwischen den Bodenrädem und der Schlauchtrommel vorgesehenen Drehmomentbegrenzungseinrichtung 46, die so ausgebildet ist, daß ein drehender Antriebsring 45 die Schlauchtrommel 9 mit Drehmomentbegrenzung mitnimmt bzw. von dieser mitgenommen werden kann. Die Drehmomentbegrenzung bewirkt einerseits, daß beispielsweise ein locker laufender Schlauch zuverlässig aufgewickelt wird, daß aber andererseits die auf den Schlauch wirkende Zugkraft begrenzt ist, um z.B. ein Straffen eines ausgelegten Schlauchabschnittes beim Aufwikeln zu vermeiden.

Die Rutschkupplung ist bei der gezeigten Ausführungsform auf die Art realisiert, daß der Antriebsring oder Rutschkupplungsring 45 eine Außenverzahnung trägt, die stets mit der Zahnung des Kupplungsrades 36 in Eingriff steht, so daß (bei eingekuppelter Kupplung) der Antriebsring 45 immer in fester Beziehung zur Drehung der Bodenräder gedreht wird. Der Antriebsring weist andererseits eine besonders in Fig. 7 gut erkennbare radial nach innen weisende Schrägverzahnungsstruktur 47 auf, in die mindestens ein mittels einer radial ausgerichteten Schraubendruckfeder 53 federbelastetes Mitnehmerelement 48 radial eingreift. Die Innenzahnung 47 des Antriebsrings 45 ist als flache, bzgl. einer Drehrichtungsumkehr nicht symmetrische Zahnung ausgebildet, bei der die identischen Zahnsegmente 49 jeweils eine steile Flanke 50 und eine flache Flanke 51 aufweisen. Das federbelastete Mitnehmerelement 48, das bei der gezeigten Ausführung eine Walzenform aufweist, wird durch eine in einer radial verlaufenden Federbuchse 52 geführte Schraubendruckfeder 53 in Richtung des Zahngrundes gedrückt. Die Federbuchse 52 ist in einem um die Achse 10 drehbaren Drehteil 54 ausgebildet, welches drehfest mit der Schlauchtrommel 9 verbunden ist. Obwohl ein einziges derartiges Mitnehmerelement ausreichen kann, sind vorzugsweise wenigstens zwei solcher Mitnehmerelemente radial entgegengesetzt vorgesehen. Die dargestellte Ausführungsform hat vier jeweils um 90° umfangsversetzte Mitnehmerpositionen, wobei die Mitnehmerelemente jeweils paarweise gegenüberliegend sich in gleicher Zahnflankenposition befinden, gegenüber dem in gekreuzter Ausrichtung angeordneten Mitnehmerpaar aber um ein halbes Zahnsegment umfangsversetzt sind. Die Rastschrittweite beim Durchrasten der Schlauchtrommel wird dadurch halbiert. Diese feine Rastung wird dadurch erreicht, daß die Anzahl der Zahnsegmente 49 der Innenzahnung des Rutschkupplungsringes 45 durch zwei, aber nicht durch vier teilbar ist. Im übrigen bewirkt die paarweise gleiche Positionierung von gegenüberliegenden Mitnehmerelementen bzgl. der einzelnen Zahnsegmente eine Verteilung der Mitnehmerkraft auf jeweils zwei Elemente sowie eine automatische Zentrierung des Rutschkupplungsringes 45, der auch selbständig in einer Führung einliegt.

Durch die bzgl. einer Drehrichtungsumkehr nicht symmetrische Form der Zahnsegmente 49 wird zum einen erreicht, daß jeweils ein Mitnehmerpaar zuverlässig in die zugeordneten Zahnwinkel gedrückt wird und insbesondere an der steilen Flanke 50 anliegt. Ferner bewirkt die nicht symmetrische Zahnform, daß auch bei schneller relativer Drehung des Rutschkupplungsrings gegenüber der Schlauchtrommel im Aufwickelsinn 55 die jeweils nachrückenden Mitnehmerelemente durch die flache Flanke immer mit dieser in Kontakt bleiben und damit ein Springen der Mitnehmerelemente und eine damit einhergehende Verringerung der Mitnehmerkraft vermieden werden. Die ungleichen Flanken erlauben ferner eine einfache Drehung der Trommel von Hand in Aufwickelrichtung, wobei in einem solchen Fall die Mitnehmerelemente mit geringem Kraftwiderstand auf den flachen Flanken abrollen und somit eine Trommeldrehung von Hand mit geringem Kraftaufwand möglich ist. Beim Abwickeln des Schlauches und bestehendem Eingriff des Kupplungsrades erfolgt ein Ausgleich zwischen der gegenüber dem Fahrweg größeren Abwickellänge des Schlauches wiederum über die Rutschkupplungsfunktion.

Durch die Drehmomentbegrenzung wird außerdem sichergestellt, daß bei einoder mehrlagiger Aufwicklung, d.h. unabhängig vom Wickeldurchmesser, jederzeit eine begrenzte Wickelkraft auf den Schlauch ausgeübt wird, um eine störungsfreie, kompakte feste Aufwicklung zu erreichen. Hierzu liegt der Durchmesser der Bodenräder 6 zweckmäßig ungefähr in der Größenordnung des Wickeldurchmessers der leeren Schlauchtrommel 9. Bei einer oder mehreren bereits vorliegenden Wicklungslagen des Schlauches 2 auf der Schlauchtrommel vergrößert sich der effektive Wickeldurchmesser und damit die Wickellänge je Trommeldrehung. Das gesamte Getriebe 25 ist so dimensioniert, daß bei vollständig abgewickeltem Schlauch, d.h. bei leerer Schlauchtrommel und damit minimalem wirksamen Wickeldurchmesser, die Wickellänge je Bodenraddrehung ungefähr gleich oder nur geringfügig größer ist als der Fahrweg der Bodenraddrehung. Bei größerem wirksamem Wickeldurchmesser, wenn beispielsweise eine zweite oder dritte Lage aufgewickelt wird, ist dann die Wickellänge je Bodenraddrehung größer als der entsprechende Fahrweg, so daß die Trommeldrehung an sich der Bodenraddrehung vorauseilen und dadurch den ausgelegten Schlauch straffen würde. Durch die Drehmomentbegrenzung zwischen dem koaxial zur Trommel 9 gelagerten Ring 45 und der Trommel selbst bleibt die Anspannung des Schlauches aber relativ klein und ist im übrigen auf den Abschnitt zwischen Trommel und Frontrollen 8 begrenzt und überträgt sich nicht auf den ausgelegten Schlauchabschnitt vor den Frontrollen.

Bei der gezeigten Ausführungsform ist vorgesehen, daß die Kopplung der Trommeldrehung mit der Bodenraddrehung durch Verschieben eines Getriebeelementes, nämlich des Kupplungszahnrades 36, aufhebbar ist. Hierzu ist, wie erwähnt, die Achse 34 des Kupplungsrades 36 auf einen Kreisbogenabschnitt um die Schlauchtrommelachse 10 verschwenkbar. Hierbei bleibt die Zahnung des Kupplungszahnrades 36 immer mit der Zahnung des Rutschkupplungsringes 45 in Eingriff, kann aber aus dem Eingriff mit dem Zwischenzahnrad 35 gelöst werden. Bei Betätigung des Kupplungshebels 41, der durch seitlichen Druck von außen (strichpunktierte Linien in Fig. 5) aus seine Endstellungen festlegenden Ausbuchtungen im Führungsschlitz 43 ausrückbar ist, drückt der in der Kulisse 39 gleitende Mitnehmerstift 40 den Bogenschieber in die eine oder andere Richtung und kuppelt dabei das Kupplungsrad 36 in das Zwischenzahnrad 35 ein oder aus. Als Alternative wäre auch eine Verlagerung des Kupplungszahnrades 36 parallel zu seiner Drehachse 34 denkbar. Die Möglichkeit der Auskopplung ist insbesondere günstig für die Abwicklung des Schlauches von der Trommel und/oder für die Handbetätigung der Trommel. Die Handbetätigung der Trommel kann durch Greifen des Trommelrandes erfolgen.

Die gezeigte Ausführungsform eines erfindungsgemäßen Schlauchwagens ermöglicht eine besonders rationelle Arbeitsweise bei der Handhabung größerer Schlauchlängen, um beispielsweise weit auseinanderliegende Rasenstücke zu besprengen. Bei herkömmlichen Schlauchwagen erfolgt dies normalerweise in der Weise, daß ein Schlauchwagen in der Nähe eines Wasseranschlusses aufgestellt, ein zur Schlauchtrommelachse führendes kurzes Schlauchstück an den Wasseranschluß angeschlossen und das auf der Schlauchtrommel aufgewickelte Schlauchstück durch den sich vom Schlauchwagen langsam entfernenden Bediener abgezogen wird. Die Aufwicklung erfolgt dann in der Regel durch manuelle Rückdrehung der Wickelrolle. Der hier gezeigte Schlauchwagen läßt sich dagegen nach Art eines Schlauch-Caddies verwenden. Dabei wird zunächst das Ende des aufgewickelten Schlauchstückes 2 an einen Wasseranschluß angeschlossen und der ggf. an seinem Ende mit einem Arbeitsgerät ausgestattete Arbeitsschlauch wird auf die Schlauchhalterung 13 am Griffbügel aufgewickelt. Dann wird der Schlauchwagen zum Einsatzort gezogen, wobei sich der Schlauch 2 langsam von der Schlauchrolle 9 abwikelt. Nach getaner Arbeit kann dann der Schlauchwagen nach vorne entlang des ausgelegten Schlauchstückes Richtung Wasseranschluß zurückgefahren werden, wobei durch die beschriebene Aufwikelautomatik eine zuverlässige Schlauchaufwicklung auf die Schlauchtrommel 9 praktisch selbsttätig erfolgt, ohne daß ein Bediener hierzu an der Trommel 9 angreifen müßte. Durch die Möglichkeit der Aufhebung der Antriebsverbindung zwischen Bodenrädern und Schlauchtrommel mit Hilfe des Kupplungshebels kann der Schlauchwagen jedoch auch jederzeit in der herkömmlichen Weise genutzt werden.

## Patentansprüche

1. Fahrbare Transporteinrichtung für Wickelgut, insbesondere Schlauchwagen, mit einem Gestell (3), an dem ein Fahrwerk (4) zum Verfahren der Transporteinrichtung auf einer Bodenoberfläche und mindestens eine Wickeltrommel (9) zum Aufwickeln von Wickelgut, insbesondere einem Schlauch (2), vorgesehen ist, wobei das Fahrwerk mindestens ein durch Bewegung der Transporteinrichtung drehbares Drehelement (6) aufweist und eine Kraftübertragungseinrichtung (25) zur Herstellung einer Antriebsverbindung zwischen dem Drehelement (6) und der Wickeltrommel vorgesehen ist, wobei bei ein- oder mehrlagigem Aufwickeln von Wickelgut das Wickelgut mit einer begrenzten Wickelkraft aufwickelbar ist, **dadurch gekennzeichnet, dass** eine der Wickeltrommel (9) in Fahrtrichtung bei Aufwicklung vorgeschaltete Andrückeinrichtung (20) zum Andrücken von auf der Bodenoberfläche liegendem Wickelgut (2) auf die Bodenoberfläche vorgesehen ist,

2. Transporteinrichtung nach Anspruch 1, **dadurch gekennzeichnet, daß** sich die Andrückeinrichtung im wesentlichen über die gesamte Breite der Transporteinrichtung erstreckt.

3. Transporteinrichtung nach Anspruch 2, **dadurch gekennzeichnet, daß** die Andrückeinrichtung als Andrückorgan mindestens einen zum Abrollen auf dem ausgelegten Wickelgut vorgesehenen Rollkörper (8) aufweist.

4. Transporteinrichtung nach Anspruch 2, **dadurch gekennzeichnet, daß** die Andrückeinrichtung (20) im Bezug auf die Wickeltrommel (9) derart angeordnet ist, daß mindestens ein Teil des Gewichtes der ggf. Wickeigut tragenden Wickeltrommel (9) auf der Andrückeinrichtung (20) lastet.

5. Transporteinrichtung nach Anspruch 1, **dadurch gekennzeichnet, daß** beim Aufwickeln von Wickelgut (2) eine auf das Wickelgut wirkende Wickelkraft automatisch und/oder im wesentlichen unabhängig von einem wirksamen Wickeldurchmesser begrenzbar ist.

6. Transporteinrichtung nach Anspruch 1, **dadurch gekennzeichnet, daß** die Kraftübertragungseinrichtung (25) zwischen Drehelement (6) und Wickeltrommel (9) mindestens eine automatische Drehmomentbegrenzungseinrichtung (46) zur Begrenzung des von dem Drehelement auf die Wickeltrommel übertragenen Drehmomentes aufweist, wobei die Drehmomentbegrenzungseinrichtung vorzugsweise nach Art einer Rutschkupplung ausgebildet ist.

7. Transporteinrichtung nach Anspruch 6, **dadurch gekennzeichnet, daß** die Drehmomentbegrenzungseinrichtung (46) ein Kupplungsteil in Form eines Zahnrades (45) mit einer Zahnung (47) und ein anderes Kupplungsteil (54) mit mindestens einem federbelasteten Mitnehmerelement (48) aufweist, das zum Eingriff in die Zahnung des Zahnrades (45) ausgebildet ist, wobei das Mitnehmerelement vorzugsweise als Rollkörper, insbesondere nach Art einer Walze, ausgebildet ist.

8. Transporteinrichtung nach Anspruch 7, **dadurch gekennzeichnet, daß** mehrere, vorzugsweise vier, gleichmäßig entlang des Umfanges des Zahnrades (45) angeordnete Mitnehmerelemente (48) vorgesehen sind.

9. Transporteinrichtung nach Anspruch 7, **dadurch gekennzeichnet, daß** mehrere, insbesondere vier, Mitnehmerelemente vorgesehen sind und daß die Zahnung (47) des Zahnrades (45) eine Anzahl von Zähnen hat, die nicht durch die Anzahl der Mitnehmerelemente (48) teilbar ist, wobei insbesondere die Anzahl der Zähne (49) der Zahnung (47) durch zwei, aber nicht durch vier teilbar ist.

10. Transporteinrichtung nach einem der Ansprüche 7 bis 9, **dadurch gekennzeichnet, daß** die Zahnung (47) des Zahnrades (45) bzgl. einer Drehrichtungsumkehr unsymmetrisch ist, wobei vorzugsweise die Zähne (49) der Zahnung (47) eine steile Flanke (50) und eine flache Flanke (51) aufweisen.

11. Transporteinrichtung nach einem der vorhergehenden Ansprüche, **dadurch gekennzeichnet, daß** die Kraftübertragungseinrichtung (25) eine vorzugsweise manuell betätigbare Kupplung zur wahlweisen Aufhebung oder Herstellung der Antriebsverbindung zwischen Drehelement (6) und Wickeltrommel (9) aufweist.

12. Transporteinrichtung nach einem der vorhergehenden Ansprüche, **dadurch gekennzeichnet, daß** die Kraftübertragungseinrichtung (25) zwischen einem mit dem Drehelement (6) gekoppelten antriebsseitigen Zahnrad (35) und einem mit der Wickeltrommel (9) gekoppelten abtriebsseitigen Zahnrad (45) ein Kupplungszahnrad (36) aufweist, das, vorzugsweise durch Verlagerung seiner Drehachse (34), wahlweise in Eingriff oder außer Eingriff mit mindestens einem der benachbarten Zahnräder (35, 45) bringbar ist, wobei die Drehachse (34) vorzugsweise um die Drehachse (10) eines der angrenzenden Zahnräder (45) verschwenkbar ist.

13. Transporteinrichtung nach einem der vorhergehenden Ansprüche, **dadurch gekennzeichnet, daß** die Kraftübertragungseinrichtung (25) für eine nur in Aufwickelrichtung (55) der Wickeltrommel (9) wirksame Antriebsverbindung zwischen Drehelement (6) und Wickeltrommel (9) ausgebildet ist, wobei die Kraftübertragungseinrichtung vorzugsweise zwischen dem Drehelement (6) und der Wickeltrommel (9) mindestens eine Freilaufeinrichtung (31) aufweist, die vorzugsweise nach Art eines Klinkenfreilaufs ausgebildet ist.

14. Transporteinrichtung nach einem der vorhergehenden Ansprüche, **dadurch gekennzeichnet, daß** zur Handhabung der Transporteinrichtung an dem Gestell (3) eine gegenüber dem Gestell bewegliche, insbesondere um eine horizontale Schwenkachse schwenkbare Griffeinrichtung vorgesehen ist, insbesondere mit einem im wesentlichen U-förmigen Griffbügel (12).

15. Transporteinrichtung nach Anspruch 15, **dadurch gekennzeichnet, daß** die Griffeinrichtung (12) im Bezug auf eine senkrechte Stellung nach vorne in Richtung Wickeltrommel und nach hinten, vorzugsweise anschlagsbegrenzt, verschwenkbar und in unterschiedlichen Schwenkstellungen am Gestell festlegbar ist.

16. Transporteinrichtung nach Anspruch 14 oder 15, **dadurch gekennzeichnet, daß** sie zusätzlich zu der Wickeltrommel (9) mindestens eine weitere, vorzugsweise an einer Griffeinrichtung (12) angeordnete Schlauchhalteeinrichtung (13) aufweist.

## Claims

1. Portable transporting device for winding material, particularly a hose truck, having a frame (3) on which is provided a travelling mechanism (4) for moving the transporting device on a ground surface and at least one winding drum (9) for winding up winding material, particularly a hose (2), in which the travelling mechanism has at least one rotary element (6) rotatable by the movement of the transporting device and a force transfer means (25) for making a drive connection between the rotary element (6) and winding drum, **characterized in that** a pressing device (20) upstream of the winding drum (9) in the direction of travel when winding on is provided for pressing winding material (2) located on the ground surface onto the latter.

2. Transporting device according to claim 1, **characterized in that** the pressing device extends substantially over the entire width of the transporting device.

3. Transporting device according to Claim 2, **characterized in that** the pressing device has as the pressing member at least one roll body (8) for rolling on the laid out winding material.

4. Transporting device according to Claim 2, **characterized in that** the pressing device (20) is so positioned with respect to the winding drum (9) that at least part of the weight of the winding drum (9), which possibly carries winding material, bears on said pressing device (20).

5. Transporting device according to claim 1, **characterized in that** on winding up the winding material (2), a winding force acting on the winding material can be limited automatically and/or substantially independently of an effective winding diameter.

6. Transporting device according to Claim 1, **characterized in that** the force transfer means (25) between the rotary element (6) and the winding drum (9) has at least one automatic torque limiting means (46) for limiting the torque transferred from the rotary element to the winding drum, the torque limiting means preferably being constructed in the manner of a slip clutch.

7. Transporting device according to claim 6, **characterized in that** the torque limiting means (46) has a coupling part in the form of a gear wheel (45) with a tooth system (47) and another coupling part (54) with at least one springloaded driving element (48), which is constructed for engaging in the tooth system of the gear wheel (45), the driving element preferably being constructed as a roll body, particularly in the manner of a roller.

8. Transporting device according to claim 7, **characterized in that** several, preferably four driving elements (48) uniformly arranged along the circumference of the gear wheel (45) are provided.

9. Transporting device according to claim 7, **characterized in that** several, particularly four driving elements are provided and that the tooth System (47) of the gear wheel (45) has a number of teeth not dividable by the number of driving elements (48) and in particular the number of teeth (49) of the tooth system (47) is dividable by two, but not by four.

10. Transporting device according to one of the Claims 7 to 9, **characterized in that** the tooth System (47) of the gear wheel (45) is asymmetrical with respect to a rotation direction reversal and preferably the teeth (49) of the tooth System (47) have a steep side (50) and a shallow side (51).

11. Transporting device according to one of the preceding Claims, **characterized in that** the force transfer means (25) has a preferably manually operable clutch for the as desired cancelling out or making of the drive connection between the rotary element (6) and the winding drum (9).

12. Transporting device according to one of the preceding claims, **characterized in that** the force transfer means (25) has a coupling gear wheel (36) between a drive-side gear wheel (35) coupled to the rotary element (6) and a driven side gear wheel (45) coupled to the winding drum (9) and which, preferably by the displacement of its rotation axis (34), can, as desired, be engaged or disengaged with respect to at least one of the adjacent gear wheels (35, 45), the rotation axis (34) preferably being pivotable about the rotation axis (10) of one of the adjacent gear wheels (45).

13. Transporting device according to one of the preceding Claims, **characterized in that** the force transfer means (25) is constructed for a drive connection between the rotary element (6) and winding drum (9) only active in the winding up direction (55) of the drum (9), the force transfer means preferably having between the rotary element (6) and winding drum (9) at least one freewheel device (31), preferably constructed in the manner of a ratchet freewheel.

14. Transporting device according to one of the preceding claims, **characterized in that** for the handling of the transporting device is provided on the frame (3) a gripping device movable with respect to the frame and in particular pivotable about a horizontal pivoting axis and in particular with a substantially U-shaped handle (12).

15. Transporting device according to Claim 14, **characterized in that** the gripping device (12), with respect to a vertical position, can be pivoted forwards towards the winding drum and rearwards in a preferably stop-limited manner and can be fixed on the frame in different pivoting positions.

16. Transporting device according to claim 14 or 15, **characterized in that** in addition to the winding drum (9), it has at least one further hose holding device (13) preferably located on a gripping device (12).

## Revendications

1. Dispositif de transport mobile pour matériau à enrouler, notamment chariot dévidoir, avec un châssis (3), sur lequel est prévu un mécanisme de roulement (4) pour déplacer le dispositif de transport sur une surface du sol et au moins un cylindre bobineur (9) pour enrouler le matériau à enrouler, notamment un tuyau souple (2), le mécanisme de roulement présentant au moins un élément rotatif (6) tournant au moyen du mouvement du dispositif de transport et qu'on prévoit un dispositif de transmission de force (25) pour réaliser un raccord de commande entre l'élément rotatif (6) et le cylindre bobineur, le matériau à enrouler pouvant être enroulé avec une force d'enroulement limitée au cas où l'enroulement du matériau à enrouler serait à une ou plusieurs couches, **caractérisé en ce qu'**on prévoit un dispositif de serrage (20) placé en amont du cylindre bobineur (9) en direction de course pendant l'enroulement, pour le serrage du matériau à enrouler (2), qui se trouve sur le sol, contre la surface du sol.

2. Dispositif de transport d'après la revendication 1, **caractérisé en ce que** le dispositif de serrage s'étend essentiellement sur toute la largeur du dispositif de transport.

3. Dispositif de transport d'après la revendication 2, **caractérisé en ce que** le dispositif de serrage présente en tant que organe de serrage au moins un organe de roulement (8) prévu pour le roulement sur le matériau à enrouler déroulé.

4. Dispositif de transport d'après la revendication 2, **caractérisé en ce que** le dispositif de serrage (20) est disposé de telle manière par rapport au cylindre bobineur (9), qu'au moins une partie du poids du cylindre bobineur (9) portant éventuellement du matériau à enrouler pèse sur le dispositif de serrage (20).

5. Dispositif de transport d'après la revendication 1, **caractérisé en ce que** pendant l'enroulement du matériau à enrouler (2) une force d'enroulement agissant sur le matériau à enrouler peut être limitée de manière automatique et/ou en substance indépendamment d'un diamètre sur enroulement efficace.

6. Dispositif de transport d'après la revendication 1, **caractérisé en ce que** le dispositif de transmission de force (25) entre l'élément rotatif (6) et le cylindre bobineur (9) présente au moins un dispositif de limitation du couple (46) pour limiter le couple transféré de l'élément rotatif au cylindre bobineur, le dispositif de limitation du couple étant réalisé de préférence à la manière d'un accouplement patinant.

7. Dispositif de transport d'après la revendication 6, **caractérisé en ce que** le dispositif de limitation du couple (46) présente une pièce d'accouplement sous forme d'une roue dentée (45) avec une denture (47) et une autre pièce d'accouplement (54) avec au moins un élément d'entraînement (48) à ressort, qui est réalisé pour l'engagement dans la denture de la roue dentée (45), l'élément d'entraînement étant réalisé de préférence en tant que organe de roulement, notamment à la manière d'un rouleau.

8. Dispositif de transport d'après la revendication 7, **caractérisé en ce qu'**on prévoit plusieurs, préférablement quatre éléments d'entraînement (48) disposés de manière uniforme le long du périmètre de la roue dentée (45).

9. Dispositif de transport d'après la revendication 7, **caractérisé en ce qu'**on prévoit plusieurs, préférablement quatre éléments d'entraînement (48) et **en ce que** la denture (47) de la roue dentée (45) présente un nombre de dents qui n'est pas divisible par le nombre des éléments d'entraînement (48), le nombre des dents (49) de la denture (47) étant notamment divisible par deux, mais pas par quatre.

10. Dispositif de transport d'après une des revendications de 7 à 9, **caractérisé en ce que** la denture (47) de la roue dentée (45) est dissymétrique relativement à un changement du sens de rotation, les dents (49) de la denture (47) présentant de préférence un flanc (50) à forte pente et un flanc (51) à faible pente.

11. Dispositif de transport d'après une des revendications précédentes, **caractérisé en ce que** le dispositif de transmission de force (25) présente un embrayage pouvant être actionné préférablement de manière manuelle au choix pour le relâchement ou la réalisation du raccord de commande entre l'élément rotatif (6) et le cylindre bobineur (9).

12. Dispositif de transport d'après une des revendications précédentes, **caractérisé en ce que** le dispositif de transmission de force (25) présente entre une roue dentée (35) du côté de commande couplée à l'élément rotatif (6) et une roue dentée (45) côté sortie couplée au cylindre bobineur (9), une roue dentée d'accouplement (36), qui peut s'engrener ou se désengrener préférablement par déport de son axe de rotation (34) avec au moins une des roues dentées (35, 45) limitrophes, l'axe de rotation (34) étant pivotable de préférence autour de l'axe de rotation (10) d'une des roues dentées (45) limitrophes.

13. Dispositif de transport d'après une des revendications précédentes, **caractérisé en ce que** le dispositif de transmission de force (25) est conçu pour réaliser un raccord de commande agissant uniquement en direction d'enroulement (55) du cylindre bobineur (9), entre l'élément rotatif (6) et le cylindre bobineur (9), le dispositif de transmission de force présentant de préférence entre l'élément rotatif (6) et le cylindre bobineur (9) au moins un dispositif à roue libre (31), qui est réalisé de préférence à la manière d'une roue libre à cliquet.

14. Dispositif de transport d'après une des revendications précédentes, **caractérisé en ce que** pour le maniement du dispositif de transport on prévoit sur le châssis (3) un dispositif de préhension, mobile par rapport au châssis et pivotable notamment autour d'un axe de pivotement horizontal, notamment avec un élément de préhension recourbé en arc (12) présentant essentiellement une forme de U.

15. Dispositif de transport d'après la revendication 14, **caractérisé en ce que** l'élément de préhension (12) est pivotable en avant relativement à une position verticale en direction du cylindre bobineur et en arrière, en étant délimité de préférence par arrêt, et en pouvant être fixé au châssis dans différentes positions de pivotement.

16. Dispositif de transport d'après la revendication 14 ou 15, **caractérisé en ce qu'**il présente en plus du cylindre bobineur (9) au moins un autre dispositif porteur de tuyau souple (13) disposé de préférence sur un dispositif de préhension (12).
